# DEMANDE DE BREVET EUROPEEN

(11) **EP 4 733 627 A1**
(43) Date de publication de la demande: **29.04.2026**
(21) Numéro de dépôt: 25207949.6
(22) Date de dépôt: 10.10.2025
(51) Int. Cl.: F16H 48/08, F16H 57/037, F16H 57/04

(54) **DISPOSITIF DE CHANGEMENT DE VITESSES POUR UN VÉHICULE AUTOMOBILE COMPRENANT UN ORGANE DE CALE CONFIGURÉ POUR ÊTRE INTERPOSÉ ENTRE UNE COURONNE DE DIFFÉRENTIEL ET AU MOINS UNE PAROI D'UN CARTER DUDIT DISPOSITIF**

(30) Priorité: 22.10.2024 FR 2411499
(71) Demandeur: AMPERE s.a.s., 92100 Boulougne-Billancourt (FR)
(72) Inventeur: BETBEDE, JEAN-LOUIS, 78084 GUYANCOURT (FR); VINCENT, FRANCK, 78084 GUYANCOURT (FR)
(74) Mandataire: Renault Group

(57) **Abrégé**

Dispositif de changement de vitesses (2) de changement de vitesses pour un véhicule automobile comprenant un carter (3), un système de transmission (4) comprenant une couronne de différentiel (41) centrée sur premier axe et un organe de cale (5) rapporté et amovible interposé entre au moins une partie d'au moins une paroi du carter (3) et la couronne de différentiel (41) le long d'au moins une direction radiale issue du premier axe.

## Description

L'invention concerne un dispositif de changement de vitesses, autrement dit une boîte de vitesses ou un réducteur, pour un véhicule automobile, ledit dispositif comprenant un organe de cale configuré pour être interposé entre une couronne de différentiel et au moins une paroi de carter dudit dispositif. L'invention concerne également un véhicule comprenant ledit dispositif. L'invention porte encore sur un organe de cale pour un dispositif de changement de vitesses et/ou pour un véhicule selon l'invention. L'invention porte enfin sur un procédé de montage du dispositif de changement de vitesses.

Dans le milieu automobile, le bon fonctionnement et la fiabilité dans le temps de dispositifs de changement de vitesses, tels que des boîtes de vitesses ou réducteurs, nécessite la mise en œuvre de la lubrification des différents composants formant lesdits dispositifs en quantité adaptée et maîtrisée, notamment par l'intermédiaire d'un fluide de lubrification tel qu'une huile. De manière connue, le relevage, autrement dit la distribution, de l'huile est au moins en partie assuré par la couronne de différentiel du dispositif de changement de vitesses qui, lorsqu'elle est en mouvement, assure une fonction de pompage, ou aspiration, du fluide de lubrification participant au déplacement de celui-ci dans le dispositif de changement de vitesses.

Afin de réduire les coûts de production de différents types de dispositifs de changement de vitesses destinés à différentes gammes ou modèles de véhicules, il peut être nécessaire de réduire le nombre de références nécessaires. Aussi, il est connu d'utiliser une même architecture de carter pour différentes gammes ou modèles de véhicules et d'adapter un système de transmission du dispositif de changement de vitesses selon les besoins du véhicules. Notamment, différents modèles de couronnes de différentiel, présentant différents diamètres, peuvent être disposés dans une même architectures de carter afin d'obtenir différents modèles de dispositifs de changements de vitesses destinés à différentes gammes et/ou modèles de véhicule. Une telle variété de dimension des couronnes de différentiel peut néanmoins affecter le bon relevage du fluide de lubrification à distribuer. En effet, l'intégration d'une couronne de différentiel de faible diamètre dans un carter dimensionné et conformé de sorte à accueillir une couronne de différentiel de diamètre bien supérieur résulte en un espacement, ou jeu, plus important entre le carter et ladite couronne qui génère une baisse d'efficience du relevage du fluide de lubrification. Afin de compenser un tel inconvénient, il peut être nécessaire d'augmenter la quantité de fluide de lubrification circulant dans le carter, ce qui affecte de manière négative le rendement du dispositif de changement de vitesses. Selon le véhicule, un tel inconvénient peut être incompatible avec le cahier des charges fixé et il est alors nécessaire de réaliser un carter particulier adapté à la couronne de différentiel.

L'invention s'inscrit dans ce contexte et vise à proposer une solution aux inconvénients listés ci-dessus et ce à moindre coût et de manière simple de mise en œuvre.

L'invention se rapporte à dispositif de changement de vitesses pour un véhicule automobile, ledit dispositif comprenant :
- un carter délimitant un volume interne ;
- un système de transmission comprenant une couronne de différentiel centrée sur premier axe et configurée pour être déplacée en rotation autour dudit axe ; et
- un organe de cale rapporté et amovible, comprenant au moins un moyen de fixation et un corps interposé entre au moins une partie d'au moins une paroi du carter et la couronne de différentiel le long d'au moins une direction radiale issue du premier axe.

Notamment, le corps de l'organe de cale est courbé et/ou complémentaire de forme d'au moins une partie d'une surface interne de l'au moins une paroi, tournée vers le volume interne.

Selon des alternatives de réalisation :
- l'au moins un moyen de fixation est amovible relativement au corps ; ou
- l'au moins un moyen de fixation et au moins une partie du corps forment un ensemble monobloc.

Optionnellement, l'organe de cale est réalisé dans un matériau métallique, tel que de l'acier ou de l'aluminium, et/ou dans un matériau plastique, tel que du polyamide, notamment renforcé de fibres de verre.

Notamment, l'organe de cale est dimensionné de sorte à s'étendre sur un secteur angulaire supérieur ou égal à 70°, voire supérieur ou égal à 80°ou supérieur ou égal à et/ou de sorte à s'étendre sur un secteur angulaire inférieur ou égal à 200°, voire inférieur ou égal à 190°ou inférieur ou égal à 180°, ledit secteur angulaire étant défini relativement au premier axe de la couronne de différentiel et entre deux demi droites issues dudit axe et passant par des points extrémaux de l'organe de cale.

Notamment, au moins une extrémité de l'organe de cale comprend un amincissement et/ou une pente.

Optionnellement, le corps de l'organe de cale comprend une première portion et une deuxième portion, amovibles et rapportées l'une relativement à l'autre, lesdites portions formant deux couches distinctes du corps superposées, la deuxième portion étant configurée pour être disposée de sorte à présenter une plus grande proximité avec la couronne de différentiel le long de la direction radiale.

L'invention s'étend également à un véhicule automobile comprenant un dispositif de changement de vitesse selon l'invention. Notamment, le véhicule comprend, en outre, un circuit d'alimentation en fluide de lubrification disposé en connexion fluidique avec le volume interne du carter.

L'invention s'étend encore à un organe de cale pour un dispositif de changement de vitesses selon l'invention, comprenant :
- un corps courbé et/ou configuré pour être complémentaire de forme d'au moins une partie d'une surface interne d'au moins une partie d'au moins une paroi d'un carter de dispositif de changement de vitesses ; et
- au moins un moyen de fixation du corps sur le carter dudit dispositif.

L'invention s'étend enfin à un procédé d'assemblage d'un dispositif de changement de vitesses, comprenant :
- le positionnement de l'organe de cale dans le volume interne et la fixation dudit organe relativement au carter par l'intermédiaire de l'au moins un moyen de fixation ;
- le positionnement et la fixation de la couronne de différentiel relativement au carter, la couronne de différentiel étant disposée de sorte que l'organe de cale est interposé entre la couronne de différentiel et au moins une partie d'au moins une paroi du carter le long d'au moins une direction radiale issue du premier axe ; puis
- la fermeture du carter.

Notamment la couronne de différentiel est disposée de sorte qu'une distance d'espacement séparant la couronne de différentiel de l'organe de cale est inférieure ou égale à 10 mm, voire inférieure ou égale à 8 mm, ou encore inférieure ou égale à 7 mm voire à 5 mm.

D'autres détails, caractéristiques et avantages ressortiront plus clairement à la lecture de la description détaillée donnée ci-après, à titre indicatif et non limitatif, en relation avec les différents exemples de réalisation illustrés sur la figure suivante :
La figure 1 est une représentation schématique d'un exemple de réalisation d'un véhicule comprenant un dispositif de changement de vitesses selon l'invention.
La figure 2 une représentation schématique d'une partie du dispositif de changement de vitesses ouvert et assemblé, comprenant une couronne de différentiel et un organe de cale.
La figure 3 est une représentation schématique en perspective d'une partie du dispositif de changement de vitesses illustré à la figure 2.
La figure 4 est une représentation schématique en perspective éclatée du dispositif de changement de vitesses illustré à la figure 2.
La figure 5 est une représentation schématique en perspective de l'organe de cale.
La figure 6 est une représentation schématique en coupe vu de dessus d'un exemple de positionnement de l'organe de cale dans le dispositif de changement de vitesses.
La figure 7 est une représentation schématique vue de côté d'une alternative de réalisation de l'organe de cale.

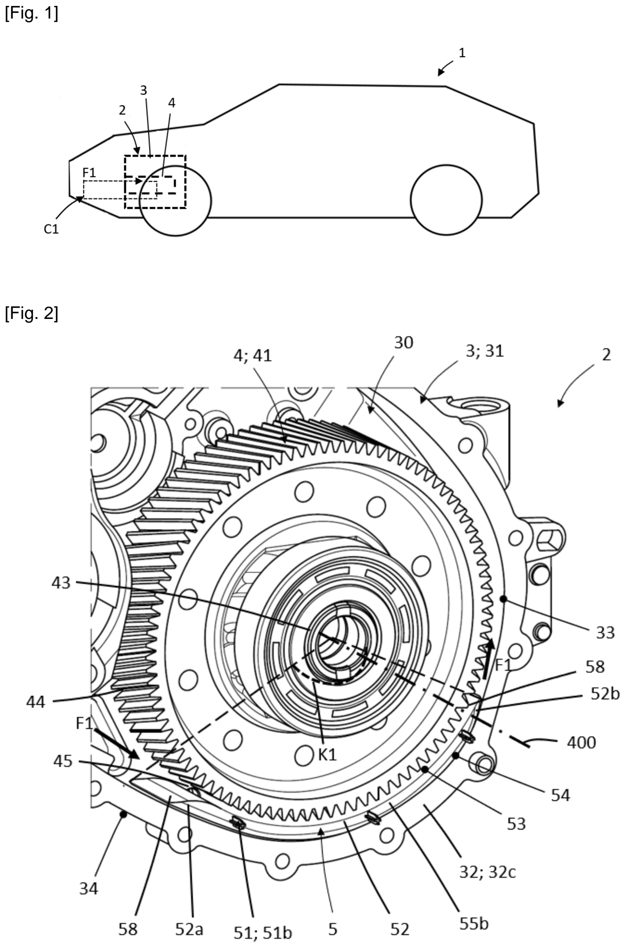

La figure 1 illustre schématiquement un exemple de réalisation d'un véhicule 1 automobile comprenant un dispositif de changement de vitesses 2, tel qu'une boîte de vitesses ou un réducteur. Le véhicule 1 considéré est, par exemple, un véhicule 1 automobile à motorisation thermique ou hybride comprenant un groupe motopropulseur thermique, non détaillé. Optionnellement, le véhicule 1 comprend, en outre, un circuit d'alimentation C1 en fluide de lubrification F1, par exemple une huile, apte à lubrifier et/ou assurer la gestion thermique du dispositif de changement de vitesses 2.

Par convention dans la description ci-après, les termes « premier », « deuxième » ont vocation à distinguer des éléments et non à définir une hiérarchie au sein desdits éléments.

De manière générale, le dispositif de changement de vitesses 2 comprend un carter 3, délimitant un volume interne 30, un système de transmission 4 et un organe de cale 5. Il est entendu que la description ci-après s'applique à un organe de cale 5 compris dans un dispositif de changement de vitesses 2 selon l'invention et à un organe de cale 5 en tant que tel, destiné à un dispositif de changement de vitesses 2.

Le carter 3 est une enveloppe, aussi qualifiée de boîtier, délimitant un volume interne 30 du dispositif de changement de vitesses 2. Par exemple, le carter 3 comprend un matériau métallique, tel que de l'acier. Notamment, de manière préférentielle, le carter 3 comprend deux demi carters 31, 31', ou demi coques, aptes à être reliées et fixées ensemble de sorte à former le carter 3. De manière connue, les demi carters 31, 31' sont fixés l'un relativement à l'autre par l'intermédiaire d'au moins un organe de fixation, non représenté, comprenant par exemple un système vis-écrou ou une vis coopérant avec un taraudage ménagé dans l'un des demi carters 31, 31'. Le carter 3 comprend une pluralités de parois 32. Chaque paroi comprend une surface interne 33, tournée vers le volume interne 30, et une surface externe 34, tournée vers l'environnement extérieur au dispositif de changement de vitesses 2. Notamment, le carter 3 comprend une première paroi 32a et une deuxième paroi 32b, opposées l'une à l'autre au sein du carter 3, et une pluralité de parois 32 intermédiaires 32c configurées pour relier la première paroi 32a à la deuxième paroi 32b lorsque le carter 3, notamment les demi carters 31, 31', sont assemblés. Il est entendu que lesdites parois 32 intermédiaires 32c peuvent être reliées à au moins l'une de la première paroi 32a et/ou de la deuxième paroi 32b. De manière optionnelle, lesdites parois intermédiaires 32c peuvent être formées par des paires de demi parois intermédiaires reliées à l'une de la première paroi 32a ou de la deuxième paroi 32b de sorte à être comprises dans l'un des demi carter 3.

Optionnellement, le carter 3 comprend une entrée de fluide de lubrification F1, non représentée, configurée pour être en connexion fluidique avec le reste du circuit d'alimentation C1 en fluide de lubrification F1 de sorte à permettre l'entrée dudit fluide dans le volume interne 30, au contact du système de transmission 4. Également, de manière optionnelle, non détaillée, le carter 3 comprend une sortie du fluide de lubrification F1, non représentée, configurée pour être en connexion fluidique avec le reste du circuit d'alimentation C1 en fluide de lubrification F1 de sorte à permettre son évacuation du volume interne 30. Notamment, lorsque le dispositif de changement de vitesses 2 est disposé dans le véhicule 1, l'entrée dudit fluide est disposée de sorte à présenter une position plus inférieure au sein du carter 3 que la sortie, c'est-à-dire qu'elle présente une plus grande proximité avec un sol sur lequel le véhicule 1 est disposé.

Le système de transmission 4 comprend au moins une couronne de différentiel 41 disposée dans le volume interne 30 du dispositif de changement de vitesses 2. De manière connue, la couronne de différentiel 41 est apte à être déplacée en rotation autour d'un premier axe 400. Également, la couronne de différentiel 41 est apte à interagir avec des pignons du système de transmission 4, non représentés.

La couronne de différentiel 41 présente une forme au moins en partie cylindrique à base circulaire et comprend classiquement une ouverture centrale traversante, apte à recevoir un arbre 43 configuré pour être mobile en rotation sur lequel la couronne de différentiel 41 est montée. Notamment, ledit arbre 43 s'étend au moins en partie le long du premier axe 400 et est centré sur ledit axe. En fonction du modèle de dispositif de changement de vitesses 2 mis en œuvre, notamment destinés à des modèles, gammes ou types de véhicules différents, une dimension, c'est-à-dire un diamètre ou rayon, de la couronne de différentiel 41 peut être amené à varier. On entend ici par « diamètre » la dimension de la couronne de différentiel 41 mesurée au niveau de la base circulaire de la forme cylindrique entre deux points diamétralement opposés compris dans une périphérie externe 44 de la couronne de différentiel 41, tournée vers les parois 32. Similairement, on qualifie de « rayon » une dimension de la couronne de différentiel 41 mesurée le long d'un axe radial issu du premier axe 400, entre un point compris dans une périphérie interne de la couronne de différentiel 41, délimitant l'ouverture centrale et configurée pour être tournée vers l'arbre 43, et un point compris dans la périphérie externe 44, opposée, de ladite couronne.

Ainsi, lorsque le système de transmission 4 est équipé dans le dispositif de changement de vitesse, la couronne de différentiel 41 présente une proximité, ou un jeu, plus ou moins importante avec au moins l'une des parois 32, notamment l'une des parois intermédiaires 32c, en fonction de sa dimension, c'est-à-dire en fonction de son diamètre ou rayon. En effet, le carter 3 est conformé et dimensionné de sorte à recevoir une large gamme de couronnes de différentiel 41 présentant une dimension inférieure ou égale à une dimension maximale possible, correspondant à un diamètre maximal ou un rayon maximal de couronne de différentiel 41 pouvant être équipée dans le carter 3 du dispositif de changement de vitesses 2 sans nécessiter de modifier la forme ou les dimensions dudit carter 3.

La couronne de différentiel 41 est configurée pour assurer le relevage, autrement dit la distribution, du fluide de lubrification F1 au sein du volume interne 30 du dispositif de changement de vitesses 2. Le fluide de lubrification F1 circule dans un espacement 45, ou jeu, situé entre la couronne de différentiel 41 et au moins l'une des parois 32 du carter 3, la couronne de différentiel 41 ayant fonction de pompage dudit fluide, c'est-à-dire qu'elle participe à sa mise en mouvement et au déplacement du fluide de lubrification F1 dans le volume interne 30. Lorsque l'espacement 45 entre la couronne de différentiel 41 et l'au moins une paroi 32 du carter 3, notamment entre la périphérie externe 44 et au moins l'une des parois intermédiaires 32c, est important, par exemple strictement supérieur à 10 mm, un manque d'efficience du relevage du fluide de lubrification F1 peut être observé et il peut être nécessaire d'augmenter la quantité de fluide de lubrification F1 circulant dans le volume interne 30, ce qui affecte de manière négative le rendement du dispositif de changement de vitesses 2, tel que cela peut être observé dans l'art antérieur.

L'organe de cale 5 est un élément amovible, rapporté et disposé dans le volume interne 30 du dispositif de changement de vitesses 2. L'organe de cale 5 est configuré pour être disposé dans le volume interne 30 de sorte à être interposée entre au moins une partie d'au moins l'une des parois 32 du carter 3 et la couronne de différentiel 41 le long d'au moins une direction, notamment le long d'au moins une direction radiale issue du premier axe 400. L'organe de cale 5 est disposé à distance non nulle de la couronne de différentiel 41. En l'espèce l'organe de cale 5 est interposé entre la périphérie externe 44 de la couronne de différentiel 41 et au moins l'une des parois intermédiaires 32c. L'organe de cale 5 permet ainsi avantageusement de réduire l'espacement 45 existant entre la couronne de différentiel 41 et l'au moins une paroi 32 considérée à une distance plus adaptée lorsque le dispositif de changement de vitesses 2 est assemblé. Un tel principe permet avantageusement de résoudre les problèmes précités et d'optimiser le relevage du fluide de lubrification F1.

L'organe de cale 5 s'étend ainsi en regard d'au moins une partie de l'une des parois 32 du carter 3. Notamment l'organe de cale 5 s'étend en regard d'au moins l'une des parois 32 intermédiaire du carter 3. De manière optionnelle, l'organe de cale 5 est au moins en partie disposé au contact de la surface interne 33 de l'au moins une paroi 32 considérée.

L'organe de cale 5 comprenant au moins un moyen de fixation 51 et un corps 52. Notamment, tout ou partie de l'organe de cale 5 est réalisé dans un matériau métallique, tel que de l'acier ou de l'aluminium, et/ou dans un matériau plastique, par exemple chargé, tel que du polyamide, aussi qualifié de nylon PA66, notamment renforcé de 35 % de fibres de verre. Notamment l'organe de cale 5 est réalisé dans un matériau apte à résister à des températures élevées de fluide de lubrification F1 au sein du dispositif de changement de vitesses 2.

De manière préférentielle, le corps 52 est une pièce pleine. Un tel principe vise à prévenir la retenue de fluide de lubrification F1 dans un volume délimité par le corps 52 de l'organe de cale 5, par exemple résultant d'une perméabilité du matériau utilisé, d'un défaut dans le corps 52 ou autre. Un tel principe peut, en outre, permettre une meilleure recyclabilité de la pièce. Optionnellement, le corps 52 s'inscrit dans une forme rectangulaire ou sensiblement rectangulaire courbée.

De manière optionnelle mais préférentielle, l'organe de cale 5, notamment le corps 52, est conformé et dimensionné de sorte que l'espacement 45 séparant la couronne de différentiel 41 de l'organe de cale 5 est définit par une distance d'espacement 46 inférieure ou égale à 10 mm, voire inférieure ou égale à 8 mm, ou encore inférieure ou égale à 7 mm voire à 5 mm. Ladite distance d'espacement 46 correspond à une distance mesurée le long d'un axe radial entre un point de la périphérie externe 44 de la couronne de différentiel 41 et un point compris dans une face interne 53 de l'organe de cale 5, notamment du corps 52, configurée pour être tournée vers la couronne de différentiel 41 au sein du dispositif. A noter qu'une telle distance d'espacement 46 peut être mesurée en différents points de l'organe de cale 5 et de la couronne de différentiel 41, relativement à différents axes radiaux, l'organe de cale 5 étant ainsi conformé et dimensionné de sorte que différentes valeurs de distance d'espacement 46, mesurées relativement à différents points de l'organe de cale 5 et différents axes radiaux, sont comprises dans les valeurs présentées ci-dessus.

De manière optionnelle mais préférentielle, le corps 52 de l'organe de cale 5 est courbé et/ou complémentaire de forme d'au moins une partie de la surface interne 33 de l'au moins une paroi 32, notamment l'au moins une paroi intermédiaire 32c, en regard de laquelle l'organe de cale 5 est disposé. Une face externe 54 de l'organe de cale 5, notamment du corps 52 de l'organe de cale 5, tournée vers l'au moins une paroi 32 et opposée à la face externe 54, peut présenter une courbure similaire ou complémentaire de forme d'une courbure de la surface interne 33 de l'au moins une paroi 32 disposée en regard de l'organe de cale 5. L'organe de cale 5 est ainsi conformé pour entourer au moins partiellement la couronne de différentiel 41.

De manière optionnelle mais préférentielle, la face interne 53 de l'organe de cale 5 est courbée de sorte à entourer la couronne de différentiel 41. Par exemple, la face interne 53 de l'organe de cale 5 est courbée de sorte à être complémentaire de forme d'une forme cylindrique dans laquelle s'inscrit au moins en partie la couronne de différentiel 41. Optionnellement encore, la face interne 53 de l'organe de cale 5 est courbée de sorte que la distance d'espacement 46 séparant la couronne de différentiel 41 de l'organe de cale 5 est égale ou sensiblement égale lorsqu'elle est évaluée en différents points de tout ou partie du corps 52 de l'organe de cale 5. Un tel principe permet d'optimiser le relevage du fluide par la couronne de différentiel 41.

De manière optionnelle mais préférentielle, l'organe de cale 5, notamment le corps 52, est dimensionné de sorte à s'étendre sur un secteur angulaire K1 supérieur ou égal à 70°, voire supérieur ou égal à 80°ou supérieur ou égal à 90°. Également, de manière optionnelle mais préférentielle, l'organe de cale 5 est dimensionné de sorte à s'étend sur un secteur angulaire K1 inférieur ou égal à 200°, voire inférieur ou égal à 190° ou inférieur o u égal à 180°. La dimension ainsi considérée correspond ici à une longueur de la cale, délimitée par le secteur angulaire K1 défini, ledit secteur angulaire K1 étant déterminé relativement au premier axe 400 sur lequel est centrée la couronne de différentiel 41 et ledit secteur angulaire K1 étant compris entre deux demi droites issues dudit axe et passant par des points extrémaux de l'organe de cale 5. Notamment, ledit secteur angulaire K1 passe par des points extrémaux de l'organe de cale 5 compris dans une première extrémité 52a du corps 52 et une deuxième extrémité 52b du corps 52, opposées l'une à l'autre.

Additionnellement, le corps 52 de l'organe de cale 5 comprend des bords extrémaux, délimitant ledit corps 52 le long de la direction définie par le premier axe 400 de la couronne lorsque le dispositif de changement de vitesses 2 est assemblé. Notamment, lesdits bords extrémaux relient la première extrémité 52a et la deuxième extrémité 52b entre elles. Par exemple, lesdits bords extrémaux sont au moins en partie plans ou sensiblement plans.

Selon un exemple de réalisation, lorsque le dispositif de changement de vitesses 2 est assemblé, un premier bord extrémal 55a est configuré pour être disposé en regard de la première paroi 32a du carter 3 tandis qu'un deuxième bord extrêmal 55b de l'organe de cale 5 est configuré pour être disposé en regard de la deuxième paroi 32b. De manière optionnelle mais préférentielle, l'organe de cale 5 est conformé et dimensionné de sorte à s'étendre sur l'essentiel d'une dimension du volume interne 30 du carter 3 définie le long du premier axe 400. On entend par « l'essentiel » au moins 50%. En l'espèce une largeur de l'organe de cale 5 est supérieure ou égale à 50% d'une largeur interne du carter 3, correspondant à la dimension du volume interne 30 mesurée entre la première paroi 32a et la deuxième paroi 32b le long de la direction définie par le premier axe 400. Un tel principe vise à limiter des turbulences du fluide de lubrification F1 susceptible de circuler entre l'organe de cale 5 et l'une desdites parois 32.

Optionnellement encore l'organe de cale 5 est dimensionné de sorte à s'étendre au contact d'au moins l'une des parois 32 délimitant le carter 3 le long de la direction définie par le premier axe 400, c'est-à-dire au contact de la première paroi 32a et/ou de la deuxième paroi 32b. Notamment, l'organe de cale 5 est dimensionné de sorte à s'étendre au contact de la première paroi 32a et de la deuxième paroi 32b. Un tel principe vise à limiter les déplacements de l'organe de cale 5 le long de la direction définie par le premier axe 400.

Selon un premier mode de réalisation, non représenté, l'au moins un moyen de fixation 51 est amovible et rapporté relativement au corps 52. Par exemple, l'au moins un moyen de fixation 51 est une vis ou un ensemble vis-écrou vissé au corps 52. Alternativement, le moyen de fixation 51 est relié au corps 52 par frettage. Le corps 52 de l'organe de cale 5 comprend alors au moins un orifice apte à recevoir l'au moins un moyen de fixation 51. De même, le carter 3 comprend au moins un trou traversant apte à recevoir l'au moins un moyen de fixation 51 et apte à s'étendre en regard de l'au moins un orifice de sorte à maintenir l'organe de cale 5 relativement au carter 3. Il est entendu que l'organe de cale 5 peut comprendre une pluralité de moyens de fixation 51 amovibles et rapportés, le corps 52 comprend alors une pluralité d'orifices aptes à recevoir chacun l'un des moyens de fixation 51 et le carter 3 comprend alors une pluralité de trous traversant.

Alternativement, l'organe de cale 5 est fixé au carter 3 par l'intermédiaire d'une colle ou par soudage.

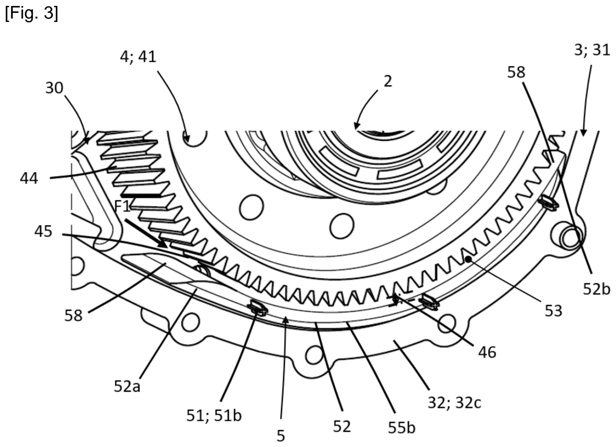

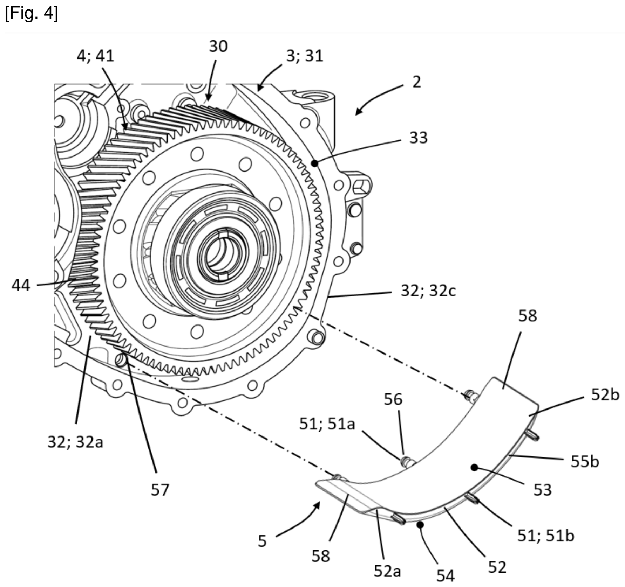

Selon un deuxième mode de réalisation, illustré aux figures 2 à 6, l'au moins un moyen de fixation 51 et au moins une partie du corps 52 forment un ensemble monobloc. Notamment, l'au moins un moyen de fixation 51 est relié à l'un des bords extrémaux du corps 52. Par exemples, l'au moins un moyen de fixation 51 est du type pion ou un élément de clipage. Optionnellement, l'au moins un moyen de fixation 51 comprend un organe d'étanchéité 56 et/ou un organe élastiquement déformable, tel qu'un joint ou un joint torique. Notamment, l'organe de cale 5 comprend une pluralité de moyens de fixation 51, lesdits moyens de fixation 51 et au moins une partie du corps 52 formant un ensemble monobloc.

Le carter 3 comprend alors au moins un trou 57, par exemple non traversant, ou des trous 57 apte(s) à recevoir l'au moins un moyen de fixation 51. Notamment, lesdits trous 57 sont configurés pour recevoir les moyens de fixations 51 par insertion selon un mouvement de translation, par exemple le long de la direction définie par le premier axe 400 et/ou sont configurés pour former butée desdits moyens de fixation 51, et par extension de l'organe de cale 5, selon au moins un sens de la direction du premier axe 400.

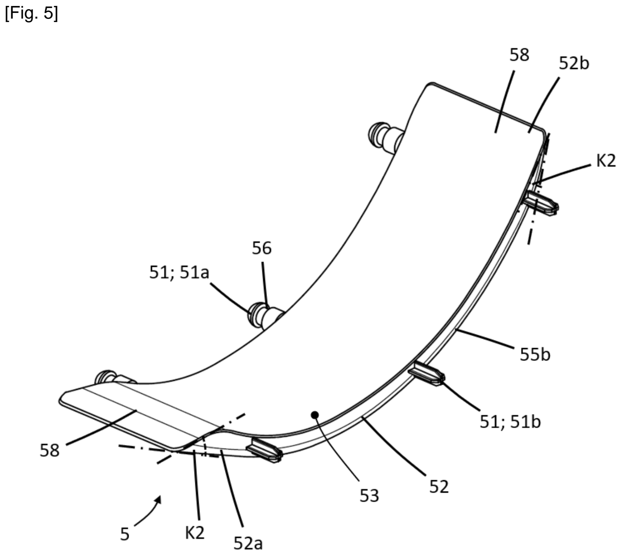

Par exemple, de manière non limitative, tel qu'illustré à la figure 5 la pluralité de moyens de fixation 51 comprend un premier sous-ensemble 51a de moyens de fixation 51 reliés au premier bord extrêmal 55a du corps 52 de l'organe de cale 5 et un deuxième sous-ensemble 51b de moyens de fixation 51 reliés au deuxième bord extrêmal 55b du corps 52 de l'organe de cale 5. Alternativement les moyens de fixation du premier sous-ensemble 51a sont disposés au niveau de la face externe 54 de l'organe de cale 5. Les moyens de fixation du premier sous-ensemble 51a sont alors aptes à coopérer avec des trous 57 disposés dans la première paroi 32a tandis que les moyens de fixation du deuxième sous-ensemble 51b sont alors aptes à coopérer avec des trous 57 disposés dans la deuxième paroi 32b. Notamment, lesdits moyens de fixation 51 s'étendent parallèlement ou sensiblement parallèlement au premier axe 400. En l'espèce les moyens de fixation 51 du premier sous-ensemble 51a comprennent des organe d'étanchéité 56 et les moyens de fixation 51 du deuxième sous-ensemble 51b comprennent des pions de centrage, notamment relativement à la deuxième paroi 32b, de sorte à permettre un assemblage simplifié du carter 3, notamment de l'un des demi carter 3 sur l'autre demi carter 3 et l'organe de cale 5.

Optionnellement, au moins l'une des extrémités de l'organe de cale 5, délimitant l'organe de cale 5, notamment le corps 52, le long d'une direction orthogonale à la première direction comprend un amincissement et/ou une pente 58 orienté(e) de sorte que l'au moins une extrémité présente une épaisseur strictement inférieure à une épaisseur d'une zone centrale du corps 52 distante de l'au moins une extrémité. Par exemple, l'amincissement et/ou la pente 58 considéré(e) comprend une inclinaison K2 comprise entre 5°et 45 °, voire entre 10°et 15°.

Notamment, l'organe de cale 5 est disposé au sein du dispositif de changement de vitesses 2 de sorte que la première extrémité 52a présente une plus grande proximité avec l'entrée de fluide de lubrification F1 du carter 3 que la deuxième extrémité 52b tandis que la deuxième extrémité 52b présente une plus grande proximité avec la sortie de fluide de lubrification F1.

La présence d'un amincissement et/ou d'une pente 58 au niveau de la première extrémité 52a, c'est-à-dire à proximité de l'entrée de fluide, permet avantageusement de limiter, voire éliminer, des turbulences dans la circulation du fluide de lubrification F1 circulant dans le volume interne 30 au niveau de la première extrémité 52a, c'est-à-dire du fluide de lubrification F1 aspiré dans l'espacement 45 séparant la couronne de différentiel 41 de l'organe de cale 5 lorsque le dispositif de changement de vitesses 2 est en fonctionnement.

La présence d'une pente ou d'un amincissement au niveau de la deuxième extrémité 52b, c'est-à-dire à proximité de la sortie de fluide, permet avantageusement d'adapter le débit du fluide de lubrification F1 sortant de l'espacement 45. Un tel amincissement et/ou une telle pente 58 participent ainsi à réguler la distribution du fluide mis en mouvement dans le volume interne 30 par le déplacement de la couronne de différentiel 41 et l'effet de pompage qu'elle génère sur le fluide de lubrification F1.

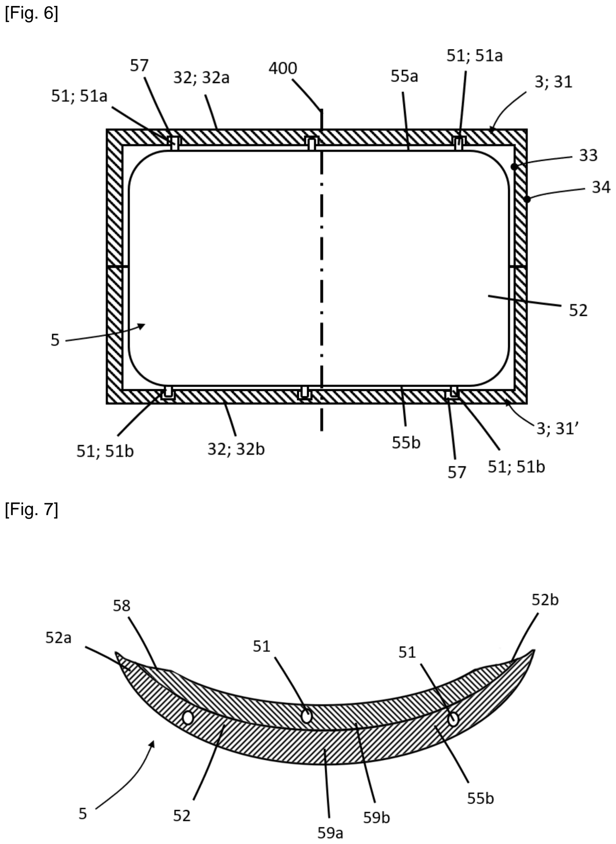

Optionnellement, tel qu'illustré à la figure 7, le corps 52 de l'organe de cale 5 comprend une première portion 59a et une deuxième portion 59b, amovibles et rapportées l'une relativement à l'autre, lesdites portions formant deux couches distinctes du corps 52. Lesdites couches sont superposées le long d'au moins une direction radiale issue du premier axe 400, la deuxième portion 59b étant configurée pour être disposée de sorte à présenter une plus grande proximité avec la couronne de différentiel 41 tandis que la première portion 59a est configurée de sorte à présenter une plus grande proximité avec l'au moins une paroi 32 en regard de laquelle l'organe de cale 5 est disposé. Autrement dit, la deuxième portion 59b est interposée entre la première portion 59a et la couronne de différentiel 41 le long de l'au moins une direction radiale. Notamment, la première portion 59a et la deuxième portion 59b comprennent des organes de liaison complémentaires de forme, non représentés, tels que des paires de pions et d'éléments receveurs, configurés pour permettre la liaison de la première portion 59a et de la deuxième portion 59b entre elles. Par exemple lesdits organes de liaison sont configurés pour être disposés au moins en partie entre la première portion 59a et la deuxième portion 59b. Il est entendu que l'organe de cale 5 peut alors comprendre davantage de portions rapportées et reliées entre elles de manière amovible réversible.

Un tel principe permet avantageusement d'adapter l'épaisseur du corps 52 de l'organe de cale 5 selon le besoin, c'est-à-dire selon la dimension de la couronne de différentiel 41, par exemple en fonction d'un compromis entre l'efficience du relevage du fluide de lubrification F1 et le rendement du dispositif de changement de vitesses 2, de sorte à réduire plus ou moins l'espacement 45 entre la couronne de différentiel 41 et l'organe de cale 5 en fonction des valeurs de distance d'espacement 46 visées définies plus haut.

Ainsi, lorsque le dispositif de changement de vitesses 2 est en fonction et que la lubrification dudit dispositif est mise en œuvre, le fluide de lubrification F1 circule dans le circuit d'alimentation C1. Il est amené au niveau de l'entrée comprise dans le carter 3, non représenté, et entre dans le volume interne 30. Le déplacement de la couronne de différentiel 41 en rotation permet le pompage, c'est-à-dire l'aspiration, du fluide de lubrification F1. Ledit fluide circule alors au niveau de la première extrémité 53a de l'organe de cale 5 et dans l'espacement 45 présent entre la couronne de différentiel 41 et l'organe de cale 5 puis ressort au niveau de deuxième extrémité 52b de l'organe de cale 5 afin d'être distribué dans le volume interne 30 puis envoyé vers la sortie du carter 3. La présence de l'organe de cale 5 permet avantageusement de réduire un espace existant entre l'au moins une paroi 32 du carter 3 et la couronne de différentiel 41 en occupant une partie dudit espace. L'organe de cale 5 est particulièrement conformé et dimensionné de sorte à limiter la distance d'espacement 46 entre l'organe de cale 5 et la couronne de différentiel 41 à des valeurs permettant d'optimiser le relevage du fluide de lubrification F1 au sein du volume interne 30 du dispositif de changement de vitesses 2.

La présente invention s'étend également à un procédé d'assemblage du dispositif de changement de vitesses 2. Ledit procédé comprend le positionnement de l'organe de cale 5 dans le carter 3, notamment dans l'un des demi carters 3. L'organe de cale 5 peut notamment être fixé au carter 3, notamment à au moins l'un des demi carters 3, par l'intermédiaire de l'au moins un moyen de fixation 51. Optionnellement, tel que décrit plus haut, l'organe de cale 5 est disposé au contact d'au moins l'une des parois 32 du carter 3. Par exemple, l'organe de cale 5 est disposé au contact d'au moins l'une parmi la première paroi 32a, la deuxième paroi 32b et/ou au moins l'une des parois 32 intermédiaire.

Ensuite, le procédé comprend le positionnement de la couronne de différentiel 41 dans le volume interne 30 du carter 3, par exemple par l'intermédiaire de l'arbre 43. La couronne de différentiel 41 est disposée à distance non nulle de l'au moins une paroi 32 du carter 3 et de l'organe de cale 5, de sorte que l'organe de cale 5 est interposé entre la couronne de différentiel 41 et l'au moins une paroi du carter 3. L'espacement 45 présent entre ladite couronne de différentiel 41 et l'organe de cale 5 est défini afin d'optimiser le relevage du fluide de lubrification F1, par exemple de sorte à présenter une distance d'espacement 46 définie tel qu'indiqué plus haut.

Enfin le procédé comprend la fermeture du carter 3, par exemple par assemblage des demi carters 3 entre eux. Une telle fermeture comprend alors optionnellement, l'insertion de l'au moins un moyen de fixation 51 de l'organe de cale 5 dans l'au moins un trou 57 du carter 3, par exemple l'insertion d'au moins un moyen de fixation 51 du deuxième sous-ensemble 51b dans l'au moins un trou 57 disposé au niveau de la deuxième paroi 32b.

La présente invention propose ainsi un dispositif de changement de vitesses comprenant un organe de cale apte à ajuster un espacement existant entre une couronne de différentiel et au moins une paroi d'un carter dudit dispositif en fonction d'une dimension de la couronne de différentiel afin d'optimiser un relevage d'un fluide de lubrification. L'invention permet ainsi l'optimisation de la circulation du fluide de lubrification pour des dispositifs de changement de vitesses différents utilisant un même type de carter mais mettant en œuvre de couronnes de différentiel de dimension différentes et ce à moindre coût et de manière simple de mise en œuvre.

La présente invention ne saurait toutefois se limiter aux moyens et modes décrits et illustrés ici et elle s'étend également à tout moyen ou mode équivalents et à toute combinaison techniquement opérante de tels moyens dans la mesure où ils remplissent *in fine* les fonctionnalités décrites et illustrées dans le présent document.

## Revendications

1. Dispositif de changement de vitesses (2) pour un véhicule (1) automobile, ledit dispositif comprenant :
- un carter (3) délimitant un volume interne (30) ;
- un système de transmission (4) comprenant une couronne de différentiel (41) centrée sur premier axe (400) et configurée pour être déplacée en rotation autour dudit axe ; et
- un organe de cale (5) rapporté et amovible, comprenant au moins un moyen de fixation (51) et un corps (52) interposé entre au moins une partie d'au moins une paroi du carter (3) et la couronne de différentiel (41) le long d'au moins une direction radiale issue du premier axe (400).

2. Dispositif de changement de vitesses (2) selon la revendication précédente, dans lequel le corps (52) de l'organe de cale (5) est courbé et/ou complémentaire de forme d'au moins une partie d'une surface interne (33) de l'au moins une paroi, tournée vers le volume interne (30).

3. Dispositif de changement de vitesses (2) selon l'une des revendications précédentes, dans lequel :
- l'au moins un moyen de fixation (51) est amovible relativement au corps (52) ; ou
- l'au moins un moyen de fixation (51) et au moins une partie du corps (52) forment un ensemble monobloc.

4. Dispositif de changement de vitesses (2) selon l'une des revendications précédentes, dans lequel l'organe de cale (5) est réalisé dans un matériau métallique, tel que de l'acier ou de l'aluminium, et/ou dans un matériau plastique, tel que du polyamide, notamment renforcé de fibres de verre.

5. Dispositif de changement de vitesses (2) selon l'une des revendications précédentes, dans lequel l'organe de cale (5) est dimensionné de sorte à s'étendre sur un secteur angulaire (K1) supérieur ou égal à 70°, voire supérieur ou égal à 80° ou supérieur ou égal à 90° et/ou de sorte à s'étendre sur un secteur angulaire (K1) inférieur ou égal à 200°, voire inférieur ou égal à 190°ou inférieur ou égal à 180 °, ledit secteur angulaire (K1) étant défini relativement au premier axe (400) de la couronne de différentiel (41) et entre deux demi droites issues dudit axe et passant par des points extrémaux de l'organe de cale (5).

6. Dispositif de changement de vitesses (2) selon l'une des revendications précédentes, dans lequel au moins une extrémité de l'organe de cale (5) comprend un amincissement et/ou une pente (58).

7. Dispositif de changement de vitesses (2) selon l'une des revendications précédentes, dans lequel le corps (52) de l'organe de cale (5) comprend une première portion (59a) et une deuxième portion (59b), amovibles et rapportées l'une relativement à l'autre, lesdites portions formant deux couches distinctes du corps (52) superposées, la deuxième portion (59b) étant configurée pour être disposée de sorte à présenter une plus grande proximité avec la couronne de différentiel (41) le long de la direction radiale.

8. Véhicule (1) automobile comprenant un dispositif de changement de vitesse selon l'une des revendications précédentes.

9. Organe de cale (5) pour un dispositif de changement de vitesses (2) selon l'une des revendications 1 à 7, comprenant :
- un corps (52) courbé et/ou configuré pour être complémentaire de forme d'au moins une partie d'une surface interne (33) d'au moins une partie d'au moins une paroi (32) d'un carter (3) de dispositif de changement de vitesses (2) ; et
- au moins un moyen de fixation (51) du corps (52) sur le carter (3) dudit dispositif.

10. Procédé d'assemblage d'un dispositif de changement de vitesses (2), comprenant :
- le positionnement de l'organe de cale (5) dans le volume interne (30) et la fixation dudit organe relativement au carter (3) par l'intermédiaire de l'au moins un moyen de fixation (51) ;
- le positionnement et la fixation de la couronne de différentiel (41) relativement au carter (3), la couronne de différentiel (41) étant disposée de sorte que l'organe de cale (5) est interposé entre la couronne de différentiel (41) et au moins une partie d'au moins une paroi (32) du carter (3) le long d'au moins une direction radiale issue du premier axe (400) ; puis
- la fermeture du carter (3).
